# EUROPÄISCHE PATENTANMELDUNG

(11) **EP 4 375 131 A1**
(43) Veröffentlichungstag der Anmeldung: **29.05.2024**
(21) Anmeldenummer: 23196314.1
(22) Anmeldetag: 08.09.2023
(51) Int. Cl.: B60N 2/02, B60N 2/30

(54) **FAHRZEUGSITZ UND VERFAHREN ZUR WERKZEUGLOSEN MONTAGE DES FAHRZEUGSITZES**

(30) Priorität: 25.11.2022 DE 102022131302
(71) Anmelder: GRAMMER AG, 92289 Ursensollen (DE)
(72) Erfinder: LINGL, Sebastian, 92256 Hahnbach (DE); NIEBAUER, Michael, 92526 Oberviechtach (DE)
(74) Vertreter: Hannke Bittner & Partner mbB Regensburg

(57) **Zusammenfassung**

Die Erfindung betrifft einen Fahrzeugsitz mit einem Sitzteilrahmen und einem zu dem Sitzteilrahmen verlagerbaren Sitzteil, wobei das Sitzteil an dem Sitzteilrahmen mittels einer Führungseinrichtung geführt ist, und wobei das Sitzteil durch eine auf das Sitzteil einwirkende Kraft, welche durch eine auf dem Sitzteil sitzende Person auf das Sitzteil aufgebracht werden kann, gegenüber dem Sitzteilrahmen aus einer Grundstellung in eine verlagerte Stellung verlagerbar ist, wobei der Fahrzeugsitz dazu ausgebildet und vorgesehen ist, dass das Sitzteil in der verlagerten Stellung durch eine Gewichtskraft der auf dem Sitzteil sitzenden Person gehalten werden kann, und wobei ein Rückstellelement vorgesehen und ausgebildet ist, das Sitzteil aus der verlagerten Stellung in die Grundstellung zu verlagern, wenn die Person das Sitzteil verlässt.

## Beschreibung

Die Erfindung betrifft Fahrzeugsitz mit einem Sitzteilrahmen und einem zu dem Sitzteilrahmen verlagerbaren Sitzteil, wobei das Sitzteil an dem Sitzteilrahmen mittels einer Führungseinrichtung geführt ist.

Aus dem Stand der Technik sind derartige Fahrzeugsitze hinlänglich bekannt, welche mittels einer derart ausgebildet sind.

Diese Fahrzeugsitze weisen einen Arretierungsmechanismus auf, mittels welchem beim Lösen der Arretierung der Fahrzeugsitz nach hinten oder nach vorne verlagert werden kann, je nach den Bedürfnissen der jeweiligen Person.

Jedoch sind diese Arretierungsmechanismen aufwendig konstruiert. Weiter, wenn die Person aufsteht und den Fahrzeugsitz verlässt, verbleibt der Fahrzeugsitz in der aktuell eingestellten Position. Besonders im Bahnbereich müssen diese Fahrzeugsitze dann wieder manuell von einem Zugbegleiter in die Grundstellung gebracht werden.

Ebenso sind diese Fahrzeugsitze nur schwierig zusammenzubauen und gegebenenfalls nur äußerst aufwendig zu reparieren.

Es ist demnach die Aufgabe der vorliegenden Erfindung, die Nachteile des Standes der Technik zu überwinden. Es wird ein Fahrzeugsitz vorgeschlagen, welcher besonders einfach konstruiert ist und sich automatisch nach Verlassen des Fahrzeugsitzes in die Grundstellung zurück verlagert. Weiter ist es eine Aufgabe der vorliegenden Erfindung, eine werkzeuglose Montage bzw. Demontage des Fahrzeugsitzes zu ermöglichen.

Diese Aufgabe wird einerseits gelöst durch einen Fahrzeugsitz mit den Merkmalen des Patentanspruches 1 und andererseits von einem Verfahren zur werkzeuglosen Montage mit den Merkmalen des Patentanspruches 9.

Ein Kerngedanke der Erfindung ist es, einen Fahrzeugsitz mit einem Sitzteilrahmen und einem zu dem Sitzteilrahmen verlagerbaren Sitzteil bereitzustellen, wobei das Sitzteil an dem Sitzteilrahmen mittels einer Führungseinrichtung geführt ist. Das Sitzteil ist durch eine auf das Sitzteil einwirkende Kraft, welche durch eine auf dem Sitzteil sitzende Person auf das Sitzteil aufgebracht werden kann, gegenüber dem Sitzteilrahmen aus einer Grundstellung in eine verlagerte Stellung verlagerbar, wobei der Fahrzeugsitz dazu ausgebildet und vorgesehen ist, dass das Sitzteil in der verlagerten Stellung durch eine Gewichtskraft der auf dem Sitzteil sitzenden Person gehalten werden kann. Zur Rückstellung ist ein Rückstellelement dazu vorgesehen und ausgebildet das Sitzteil aus der verlagerten Stellung in die Grundstellung zu verlagern, wenn die Person das Sitzteil verlässt.

Erfindungsgemäß ist es vorgesehen, dass durch eine einwirkende Kraft das Sitzteil verlagert werden kann, wobei die einwirkende Kraft durch eine auf dem Sitzteil sitzende Person aufgebracht wird. Eine derartige einwirkende Kraft kann durch eine Gewichtsverlagerung der Person auf das Sitzteil einwirken bzw. kann in das Sitzteil eingebracht werden. Hierdurch ist eine besonders einfache und an die Person angepasste Verlagerung des Sitzteils hinsichtlich der Bedürfnisse der Person möglich.

Ebenso ist es erfindungsgemäß vorgesehen, dass das Sitzteil, nachdem das Sitzteil in die verlagerte Position gebracht worden ist, allein durch die Gewichtskraft der Person, welche auf dem Sitzteil sitzt, in der verlagerten Position gehalten wird. Dies ist insbesondere der Fall, dass erfindungsgemäß zwar ein Rückstellelement vorgesehen ist, dieses aber bevorzugt derart ist, dass eine von dem Rückstellelement wirkende und bereitgestellte (Rückstell-) Kraft kleiner ist als die Gewichtskraft der Person, jedoch auch derart ist, dass eine Rückstellung aus der verlagerten Position in die Grundstellung erfolgt, wenn die Person das Sitzteil verlässt, das heißt, die Gewichtskraft nicht mehr auf das Sitzteil wirkt.

Eine Verlagerung des Sitzteils zu dem Sitzteilrahmen ist bevorzugt entlang einer Verlagerungsrichtung vorgesehen. Besonders bevorzugt ist die Verlagerungsrichtung eine Längsrichtung des Fahrzeugsitzes.

Besonders bevorzugt erfolgt die Rückstellung des Sitzteils, also die Verlagerung aus der verlagerten Position in die Grundstellung, automatisch. Ein manuelles Verlagern des Sitzteils ist nicht mehr notwendig. Somit braucht, besonders im Bahnbereich oder dergleichen, eine Begleitperson des Fahrzeugs den Fahrzeugsitz nicht mehr manuell zurückzustellen, was eine erhebliche Arbeitserleichterung und Zeitersparnis bedeuten kann.

Besonders bevorzugt ist es vorgesehen, dass das Rückstellelement vorgesehen und ausgebildet ist, das Sitzteil aus der verlagerten Position in die Grundstellung automatisch zu verlagern.

Gemäß einer bevorzugten Ausführungsform ist es vorgesehen, dass das Rückstellelement einerseits mit dem Sitzteil und andererseits mit dem Sitzteilrahmen verbunden ist. Hierdurch ist es möglich, dass das Rückstellelement eine Relativbewegung zwischen dem Sitzteil und dem Sitzteilrahmen hervorrufen kann.

Gemäß einer weiteren bevorzugten Ausführungsform kann es vorgesehen sein, dass das Rückstellelement ein erstes Ende und ein zweites Ende aufweist, wobei das erste Ende mit dem Sitzteil und das zweite Ende mit dem Sitzteilrahmen verbunden ist. Weiter bevorzugt können das erste Ende und/oder das zweite Ende drehbar mit dem Sitzteil bzw. dem Sitzteilrahmen verbunden sein. Dadurch, dass das Sitzteil starr verbleibt und sich das Sitzteil relativ zu dem Sitzteilrahmen bewegen kann, kann dieser Bewegung durch eine drehbare Verbindung gut nachgefolgt werden.

Gemäß einer bevorzugten Ausführungsform kann es vorgesehen sein, dass das erste Ende des Rückstellelements mittels eines ersten Kugelkopfelements mit dem Sitzteil und/oder das zweite Ende des Rückstellelements mittels eines zweiten Kugelkopfelements mit dem Sitzteilrahmen verbunden sind.

Gemäß einer besonders bevorzugten Ausführungsform kann das Rückstellelement konstruktiv besonders einfach ausgebildet sein, wenn das Rückstellelement durch ein Gasdruckfederelement ausgebildet ist. Besonders bevorzugt ist das Gasdruckfederelement in der Grundstellung im Wesentlichen entspannt und in der verlagerten Stellung komprimiert.

Das Gasdruckfederelement umfasst bevorzugt einen Zylinder und eine Kolbenstange, welche mit dem Zylinder verbunden ist und welche gegenüber dem Zylinder verlagert werden kann.

Im Wesentlichen entspannt bedeutet in diesem Zusammenhang, dass das Gasdruckfederelement annähernd vollständig ausgefahren ist. Dies ist der Fall, wenn keine Kraft auf das Gasdruckfederelement einwirkt. Aufgrund der Positionierung des Rückstellelements kann es jedoch sein, dass ein geringer Restweg verbleibt, so dass das Rückstellelement noch Spiel aufweist, so dass das Rückstellelement noch in der Grundposition des Fahrzeugsitzes geringfügig bewegbar ist. Anders gesagt weist das Rückstellelement in der Grundposition noch einen Restweg auf bis zur vollständigen entspannten Stellung des Gasdruckfederelements.

Besonders bevorzugt ist das Rückstellelement länglich ausgebildet. Weiter bevorzugt ist das Rückstellelement in der Verlagerungsrichtung, welche beispielsweise der Längsrichtung des Fahrzeugsitzes entspricht, angeordnet. Dies ist insbesondere dann vorteilhaft, wenn das Rückstellelement als ein Gasdruckfederelement ausgebildet ist, so dass das Gasdruckfederelement besonders gut wirken und komprimiert werden kann.

Erfindungsgemäß ist eine Führungseinrichtung vorgesehen, mittels welcher das Sitzteil gegenüber dem Sitzteilrahmen geführt werden kann. Besonders bevorzugt ist die Führungseinrichtung derart ausgebildet, dass das Sitzteil in der Verlagerungsrichtung verlagerbar ist.

Gemäß einer bevorzugten Ausführungsform kann die Führungseinrichtung besonders einfach konstruiert sein, wenn die Führungseinrichtung Nutensteinelemente und Nuten umfasst, wobei die Nutensteine zumindest teilweise komplementär zu den Nuten ausgebildet sind, so dass die Nutensteine in den Nuten führbar sind.

Dabei kann es vorgesehen sein, dass die Nutensteinelemente mit dem Sitzteilrahmen verbunden, insbesondere fest verbunden, sind, und die Nuten in dem Sitzteil ausgebildet sind. Hierdurch kann die Montage des Sitzteils erleichtert werden. Alternativ wäre es auch denkbar, dass Nutensteinelemente mit dem Sitzteil verbunden, insbesondere fest verbunden, sind, und die Nuten in dem Sitzteilrahmen ausgebildet sind.

Besonders einfach und konstruktiv vorteilhaft kann die Führungseinrichtung ausgebildet sein, wenn eines der Nutensteinelemente bzw. jedes Nutensteinelement einen ersten Abschnitt, einen zweiten Abschnitt und einen dritten Abschnitt umfassen, wobei der erste Abschnitt oberhalb der Nute angeordnet ist und breiter als die Nute ausgebildet ist, und wobei der zweite Abschnitt sich an den ersten Abschnitt anschließt und sich durch die entsprechende Nut hindurch erstreckt und ein dritter Abschnitt unterhalb der Nut angeordnet ist und sich an den zweiten Abschnitt anschließt, wobei der dritte Abschnitt ebenso breiter als die Nut ausgebildet ist.

Das Nutensteinelement weist also bevorzugt eine Schichtstruktur auf, ausgebildet durch den ersten Abschnitt, den zweiten Abschnitt und den dritten Abschnitt, welche in einer Höhenrichtung übereinander angeordnet sind. Dadurch, dass bevorzugt der zweite Abschnitt in der Nut geführt werden kann und der erste Abschnitt und der dritte Abschnitt breiter als die Nut ausgebildet sind, kann ein Lösen des Nutensteins und der Nut verhindert werden.

Besonders bevorzugt weist die Nut bzw. weisen die Nuten einen Montageabschnitt auf, welcher dazu ausgebildet und vorgesehen ist, dass der erste Abschnitt durch diesen Montageabschnitt geführt werden kann, so dass der zweite Abschnitt dann durch die Nut hindurchragen kann. Bevorzugt ist der Montageabschnitt derart dimensioniert, dass der erste Abschnitt hindurchgeführt werden kann.

Die Nut wird durch den ersten Abschnitt und den dritten Abschnitt gehalten, so dass ein Herausfallen des Nutensteins aus der Nut gut verhindert werden kann.

Besonders bevorzugt ist die Position des Montageabschnitts bzw. die Verlagerung des Sitzteils derart, dass in einem zusammengebauten Zustand des Fahrzeugsitzes, das heißt, dass das Sitzteil am Sitzteilrahmen montiert ist, der Nutenstein nicht bis in den Montageabschnitt geführt werden kann, um ein Herausfallen des Nutensteins aus der Nut verhindern zu können.

Besonders vorteilhaft kann gemäß einer bevorzugten Ausführungsform das Herausfallen eines Nutensteins verhindert werden und die Verlagerung begrenzt werden, wenn an dem Sitzteil ein erster Endanschlag und an dem Sitzteilrahmen ein Bolzenelement angeordnet sind, welche dazu vorgesehen und ausgebildet sind, bei einer Bewegung des Sitzteils aus der Grundstellung in die verlagerte Stellung miteinander wechselzuwirken, wobei ein Kontaktieren des Bolzenelements mit dem Endanschlag die verlagerte Stellung, insbesondere die maximal verlagerte Stellung, definiert.

Weiter bevorzugt ist es vorteilhaft, wenn der erste Endanschlag in der Verlagerungsrichtung vor dem Montageabschnitt angeordnet ist. Das heißt, dass bei einer Verlagerung in die verlagerte Stellung es nicht möglich ist, das Sitzteil so weit zu verschieben, dass der Nutenstein in dem Montageabschnitt angeordnet ist.

Der theoretisch noch verfügbar zurücklegbare Weg aus der maximal verlagerten Stellung in den Montageabschnitt hinein entspricht im Wesentlichen dem Restweg des Rückstellelements. Um das Sitzteil bzw. das jeweilige Nutensteinelement in den Montageabschnitt zu verlagern, ist es notwendig, dass das Bolzenelement von dem ersten Endanschlag lösbar ist, so dass das Sitzteil über den ersten Endanschlag bzw. der Grundstellung hinaus verlagert werden kann (und umgekehrt), so dass das Sitzteil leicht montiert bzw. demontiert werden kann.

Besonders bevorzugt kann die Verlagerungsbewegung des Sitzteils gegenüber dem Sitzteilrahmen weiter begrenzt werden, aufgrund von Platzbeschaffnissen in dem Fahrzeug, beispielsweise einem Abstand zum Vordersitz, wenn ein zweiter Endanschlag an dem Sitzteil angeordnet ist, wobei in der Grundstellung das zweite Ende mit dem zweiten Endanschlag in Kontakt steht und in der verlagerten Stellung das zweite Ende von dem zweiten Endanschlag gelöst ist.

Der zweite Endanschlag ist besonders bevorzugt vor dem ersten Endanschlag angeordnet, in der Verlagerungsrichtung gesehen.

Gelöst wird die zugrunde liegende Aufgabe auch von einem Verfahren zur werkzeuglosen Montage des Fahrzeugsitzes mit den Merkmalen des Patentanspruches 9.

Das Verfahren zur werkzeuglosen Montage umfasst zumindest die Verfahrensschritte:
a) Bereitstellen eines Sitzteilrahmens und eines Sitzteils, wobei ein Rückstellelement mit dem Sitzteil verbunden ist,
b) Verbinden des Sitzteilrahmens und des Sitzteils mittels der Führungseinrichtung;
c) Verbinden des ersten Endes des Rückstellelements mit dem Sitzteilrahmen.

Werkzeuglos bedeutet hier insbesondere, dass eine Person, welche den Fahrzeugsitz montiert, keinerlei Hilfsmittel wie Werkzeug benötigt, um den Fahrzeugsitz zu montieren. Die Bauteile des Fahrzeugsitzes, insbesondere das Sitzteil und der Sitzteilrahmen können ohne Einsatz von Hilfsmitteln miteinander verbunden und demontiert werden.

Gemäß einer weiteren bevorzugten Ausführungsform kann die Montage noch weiter erleichtert werden, wenn im Verfahrensschritt c) das erste Ende mittels des zweiten Endanschlags umfassend eine Führungskulisse in der Höhenrichtung verlagert wird, so dass das erste Ende mit dem Sitzteilrahmen verbunden werden kann.

Der zweite Endanschlag dient daher nicht nur als ein Endanschlag bei der Benutzung des Fahrzeugsitzes, sondern auch als eine Hilfe zur Montage des Sitzteils an dem Sitzteilrahmen.

Gemäß einer weiteren bevorzugten Ausführungsform kann die Montage erleichtert werden, wenn der erste Endanschlag nach dem Verfahrensschritt b) in der Verlagerungsrichtung bzw. einer Längsrichtung gesehen vor dem Bolzenelement und das Bolzenelement nicht in den Endanschlag eingreifend angeordnet ist, so dass zum Einstellen der Grundstellung das Bolzenelement in einer Höhenrichtung nach unten verlagert wird, anschließend wird das Sitzteil in Längsrichtung solange verlagert, bis das Bolzenelement in den Endanschlag einrasten kann und Verlagern des Bolzenelements in Höhenrichtung nach oben und Kontaktieren des ersten Endanschlags.

Weiterführende Ausgestaltungen und Ausbildungen der Ausführungsformen untereinander sind auf die weiteren Ausführungen anwendbar und sind untereinander frei kombinierbar, sofern sie nicht gegenläufigen Ausführungsformen entsprechen. Merkmale hinsichtlich des Fahrzeugsitzes und des Verfahrens zur Montage des Fahrzeugsitzes sind in korrespondierender Weise verwendbar.

Weitere vorteilhafte Ausführungsformen ergeben sich aus den Unteransprüchen.

Die verschiedenen Ausführungsformen mit all ihren Merkmalen sind dabei beliebig kombinierbar und austauschbar.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen

Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigten Merkmalen ergeben können.

Weitere Ziele, Vorteile und Zweckmäßigkeiten der vorliegenden Erfindung sind der nachfolgenden Beschreibung in Verbindung mit den Zeichnungen zu entnehmen. Hierbei zeigt:
- Figur 1A: einen Fahrzeugsitz in einer Seitenansicht in einer Grundstellung;
- Figur 1B: den Fahrzeugsitz gemäß Figur 1A in einer Frontansicht;
- Figur 2A: das Sitzteil der Figur 1A;
- Figur 2B: das Sitzteil gemäß Figur 2A in einer Untenansicht;
- Figur 2C: den Sitzteilrahmen des Fahrzeugsitzes gemäß Figur 1A;
- Figur 3: einen Ausschnitt des Sitzteilrahmens der Figur 2C;
- Figur 4A-4C: schematisch das Funktionsprinzip des Fahrzeugsitzes;
- Figur 5A: einen Ausschnitt des Sitzteils gemäß Figur 2A mit einem Rückstellelement;
- Figur 5B: die Figur 5A in einer Seitenansicht;
- Figur 6A: einen Ausschnitt des Sitzteils und des Sitzteilrahmens in der Grundstellung;
- Figur 6B: einen Ausschnitt des Sitzteils und des Sitzteilrahmens in der verlagerten Stellung;
- Figur 7A-7C: ein Montageverfahren;
- Figur 8A-8E: ein Demontageverfahren.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

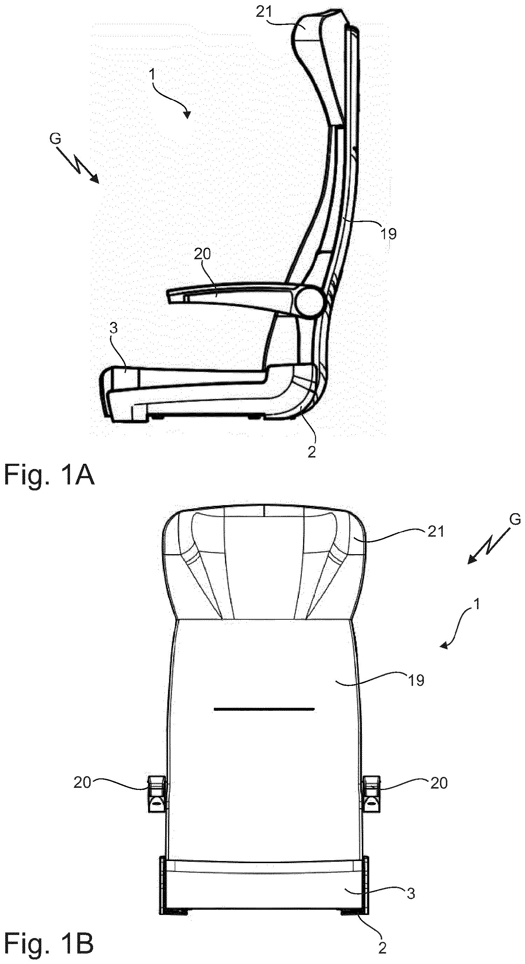

In den Figuren 1A und 1B ist ein erfindungsgemäßer Fahrzeugsitz 1 dargestellt, wobei der Fahrzeugsitz 1 in der Figur 1A in einer Seitendarstellung und in der Figur 1B in einer Frontansicht dargestellt ist, jeweils in einer Grundstellung G.

Weiter kann der Fahrzeugsitz 1 eine Rückenlehne 19, mindestens eine an der Rückenlehne 19 drehbar verbundene Armlehne 20 und eine Kopfstützte 21 aufweisen.

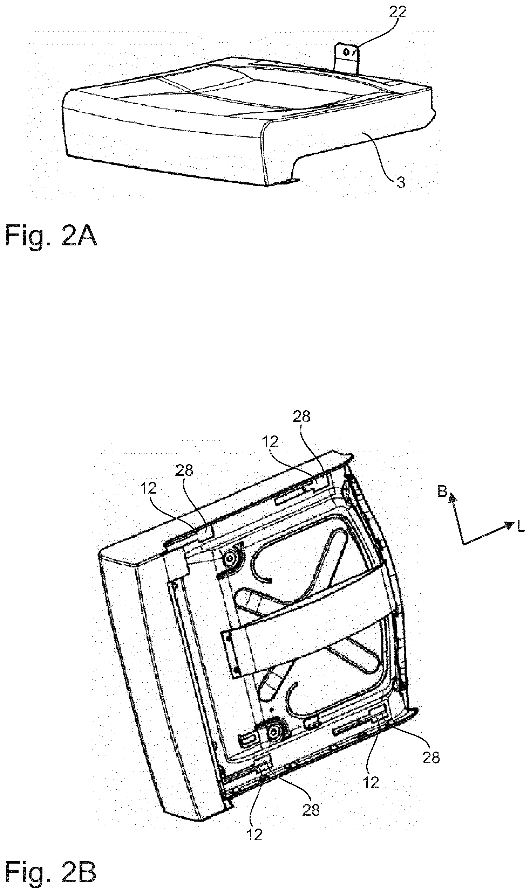

In der Figur 2A ist das Sitzteil 3 separat dargestellt. Besonders bevorzugt weist das Sitzteil 3 an einem hinteren Ende ein Montierelement 22 auf, welches mit zumindest einem Teil der Rückenlehne 19 verbunden werden kann. Auf das Montierelement 22 wird im Zusammenhang mit der Montage bzw. Demontage des Fahrzeugsitzes 1 näher eingegangen.

Die Figur 2B zeigt das Sitzteil 3 der Figur 2A in einer perspektivischen Ansicht von unten. Erkennbar ist beispielsweise, dass das Sitzteil 3 Nuten 12 aufweist, wobei bevorzugt zwei Nuten 12 rechts und zwei Nuten 12 links am Sitzteil 3 vorgesehen sind, das heißt, dass die linken Nuten 12 und die rechten Nuten 12 in Breitenrichtung B voneinander beabstandet sind. Die zwei Nuten 12 auf der jeweiligen Seite sind weiter bevorzugt hintereinander angeordnet, das heißt in Längsrichtung L voneinander beabstandet.

Die Nuten 12 stehen im zusammengebauten Zustand des Fahrzeugsitzes 1 mit Nutensteinelementen 11 in Kontakt, welche an dem Sitzteilrahmen 2 angeordnet und mit diesem verbunden sind. Die Anordnung der Nutensteinelemente 11 ist analog zu der Anordnung der Nuten 12, so dass jede Nute 12 einen Nutenstein 11 aufnehmen bzw. kontaktieren kann.

Erfindungsgemäß ist eine Führungseinrichtung 4 vorgesehen, mittels welcher das Sitzteil 3 gegenüber dem Sitzteilrahmen 2 geführt werden kann. Besonders bevorzugt ist die Führungseinrichtung 4 derart ausgebildet, dass das Sitzteil 3 in der Verlagerungsrichtung verlagerbar ist.

Gemäß einer bevorzugten Ausführungsform kann die Führungseinrichtung 4 besonders einfach konstruiert sein, wenn die Führungseinrichtung 4 die Nutensteinelemente 11 und die Nuten 12 umfasst, wobei die Nutensteinelemente 11 zumindest teilweise komplementär zu den Nuten 12 ausgebildet sind, so dass die Nutensteinelemente 11 in den Nuten 12 geführt werden können.

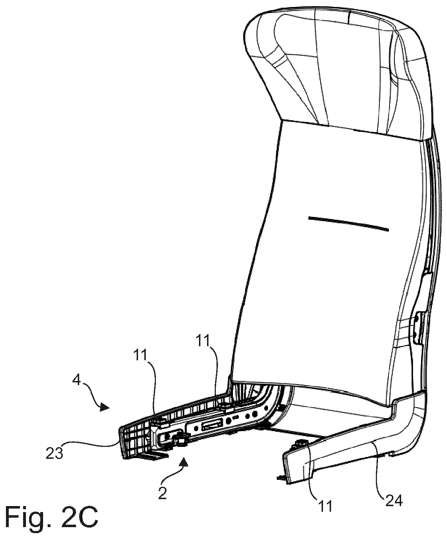

Wie in den Figuren 2B und 2C dargestellt, sind die Nutensteinelemente 11 mit dem Sitzteilrahmen 2 verbunden, insbesondere fest verbunden, und die Nuten 12 in dem Sitzteil 3 ausgebildet sind. Hierdurch kann die Montage des Sitzteils 3 erleichtert werden, was hinsichtlich nachfolgender Figuren weiter erläutert wird.

Weiter bevorzugt sind ein erstes Abdeckelement 23 und ein zweites Abdeckelement 24 dargestellt, welche mit dem Sitzteilrahmen 2 verbunden sind, bevorzugt lösbar verbunden sind, und welche den Sitzteilrahmen 2 nach außen abdecken, so dass ein Eingreifen von Fingern in die Führungseinrichtung 4 während der Verlagerung nicht möglich ist.

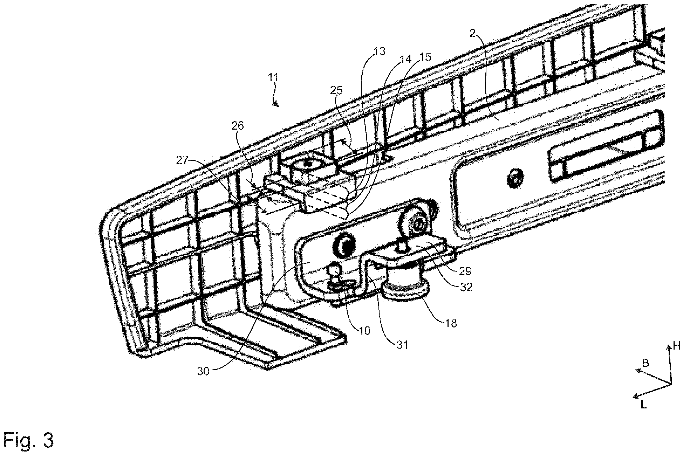

Besonders einfach und konstruktiv vorteilhaft kann die Führungseinrichtung 4 ausgebildet sein, wenn eines der Nutensteinelemente 11 bzw. jedes Nutensteinelement 11 einen ersten Abschnitt 13, einen zweiten Abschnitt 14 und einen dritten Abschnitt 15 umfassen, wobei bevorzugt der erste Abschnitt 13 oberhalb der Nut 12 angeordnet ist und breiter als die Nut 12 ausgebildet ist, und wobei bevorzugt der zweite Abschnitt 14 sich an den ersten Abschnitt 13 anschließt und sich durch die entsprechende Nut 12 hindurch erstreckt und ein dritter Abschnitt 15 unterhalb der Nut 12 angeordnet ist und sich an den zweiten Abschnitt 14 anschließt, wobei der dritte Abschnitt 15 ebenso breiter als die Nut 12 ausgebildet ist. Dies ist besonders gut in der weiteren Figur 3 zu erkennen, in welcher ein Teil der Figur 2C vergrößert dargestellt ist.

Besonders bevorzugt ist der zweite Abschnitt 14 zumindest in Breitenrichtung B komplementär zu der Nut 12 ausgebildet. Der zweite Abschnitt 14 weist eine zweite Breite 26 auf. Weiter bevorzugt weist der erste Abschnitt 13 eine erste Breite 25 und der dritte Abschnitt 15 eine dritte Breite 27 auf, welche jeweils größer als die zweite Breite 26 und größer als die Breite einer Nut 12 ausgebildet sind. Hierdurch kann die Nut 12 gegenüber dem Nutensteinelement 11 gut verlagert werden, was in einer guten Verlagerung des gesamten Sitzteils 3 gegenüber dem Sitzteilrahmen 2 resultiert.

Das Nutensteinelement 11 weist also bevorzugt eine Schichtstruktur auf, ausgebildet durch den ersten Abschnitt 13, den zweiten Abschnitt 14 und den dritten Abschnitt 15, welche in einer Höhenrichtung H übereinander angeordnet sind. Dadurch, dass bevorzugt der zweite Abschnitt 14 in der Nut 12 geführt werden kann und der erste Abschnitt 13 und der dritte Abschnitt 15 breiter als die Nut 12 ausgebildet sind, kann ein Lösen des Nutensteinelements 11 und der Nut 12 verhindert werden.

Besonders bevorzugt weist die Nut 12 bzw. weisen die Nuten 12 einen Montageabschnitt 28 auf, welcher dazu ausgebildet und vorgesehen ist, dass der erste Abschnitt 13 durch diesen Montageabschnitt 28 geführt werden kann, so dass der zweite Abschnitt 14 dann durch die Nut 12 hindurchragen kann. Bevorzugt ist der Montageabschnitt 28 derart dimensioniert, dass der erste Abschnitt 13 hindurchgeführt werden kann.

Die Nut 12 wird durch den ersten Abschnitt 13 und den dritten Abschnitt 15 gehalten, so dass ein Herausfallen des Nutensteinelements 11 aus der Nut 12 gut verhindert werden kann.

Besonders bevorzugt ist die Position des Montageabschnitts 28 bzw. die Verlagerung des Sitzteils 3 derart, dass in einem zusammengebauten Zustand des Fahrzeugsitzes 1, das heißt, dass das Sitzteil 3 am Sitzteilrahmen 2 montiert ist, der Nutenstein 11 nicht bis in den Montageabschnitt 28 geführt werden kann, um ein Herausfallen des Nutensteins 11 aus der Nut 12 verhindern zu können.

Besonders vorteilhaft kann gemäß einer bevorzugten Ausführungsform das Herausfallen eines Nutensteinelements 11 verhindert werden und die Verlagerung begrenzt werden, wenn an dem Sitzteil 3 ein erster Endanschlag 16 und an dem Sitzteilrahmen 2 ein Bolzenelement 18 angeordnet sind, welche dazu vorgesehen und ausgebildet sind, bei einer Bewegung des Sitzteils 3 aus der Grundstellung G in die verlagerte Stellung V miteinander wechselzuwirken, wobei ein Kontaktieren des Bolzenelements 18 mit dem ersten Endanschlag 16 die (maximal) verlagerte Stellung V definieren kann. Besonders bevorzugt kann das Bolzenelement 18 in der Höhenrichtung H verlagert werden, derart, dass die Verbindung zwischen Bolzenelement 18 und dem ersten Endanschlag 16 gelöst werden kann.

Weiter bevorzugt ist es vorteilhaft, wenn der erste Endanschlag 16 bzw. das Bolzenelement 18 in der Verlagerungsrichtung vor dem Montageabschnitt 28 angeordnet ist. Das heißt, dass bei einer Verlagerung in die Grundstellung G es nicht möglich ist, das Sitzteil 3 so weit zu verschieben, dass der Nutenstein 11 in dem Montageabschnitt 28 angeordnet ist. So lässt sich ein unbeabsichtigtes Lösen des Sitzteils 3 von dem Sitzteilrahmen 2 effektiv verhindern.

Weiter bevorzugt ist ein erstes Halteelement 29 vorgesehen, welches an dem Sitzteilrahmen 2 angeordnet und mit diesem verbunden sein kann. Das erste Halteelement 29 trägt bevorzugt das Bolzenelement 18. Weiter bevorzugt kann das erste Halteelement 29 eine Verbindung für das Rückstellelement 5 aufweisen bzw. tragen, hier dargestellt durch ein zweites Kugelkopfelement 10.

Besonders bevorzugt weist das erste Halteelement 29 teilweise eine U-förmige Ausgestaltung auf mit einem ersten Schenkel 30, welcher bevorzugt an dem Sitzteilrahmen 2 angeordnet ist, und mit einem zweiten Schenkel 31, welcher zu dem ersten Schenkel 30 in Breitenrichtung B beabstandet ist. An den zweiten Schenkel 31 schließt sich bevorzugt ein waagerechtes Haltestück 32 an, an welchem das Bolzenelement 18 angeordnet sein kann. Durch die U-förmige Ausgestaltung des ersten Halteelements 29 kann in dem U-Abschnitt besonders gut das Rückstellelement 5 aufgenommen werden, so dass eine Platzersparnis die Folge ist.

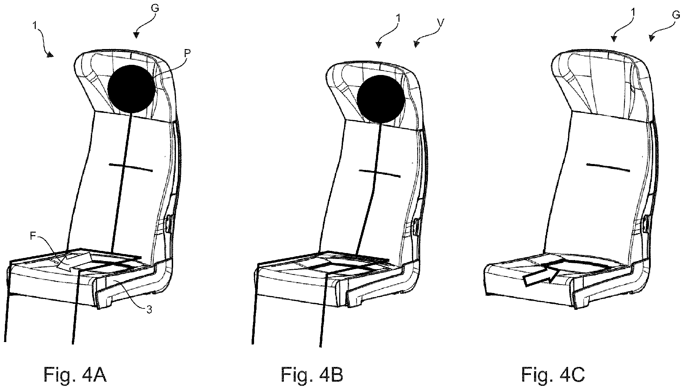

In den Figuren 4A bis 4C ist das erfindungsgemäße Funktionsprinzip anhand von schematischen Zeichnungen dargestellt.

Auf dem Fahrzeugsitz 1 sitzt eine Person P, genauer gesagt sitzt die Person P auf dem Sitzteil 3. Durch die Person P kann eine Kraft F, welche auf das Sitzteil 3 einwirkt, aufbringen, um den Fahrzeugsitz 1 aus der aktuell vorliegenden Grundstellung G des Fahrzeugsitzes 1 in eine verlagerte Stellung V zu bringen, welche in der Figur 4B dargestellt ist. Das Sitzteil 3 ist im Vergleich zu der Figur 4A verlagert.

Der Fahrzeugsitz 1 ist dazu derart ausgebildet und vorgesehen, dass das Sitzteil 3 in der verlagerten Stellung V durch eine Gewichtskraft der auf dem Sitzteil 3 sitzenden Person P gehalten werden kann.

Wenn die Person P den Fahrzeugsitz 1 verlässt, also aufsteht, so ist es erfindungsgemäß vorgesehen, dass durch das Rückstellelement 5 das Sitzteil 3 aus der verlagerten Position V in die Grundstellung G verlagert wird. Die Wirkung des Rückstellelements 5 ist durch den Pfeil der Figur 4C dargestellt, welches die Bewegung des Sitzteils 3 anzeigt.

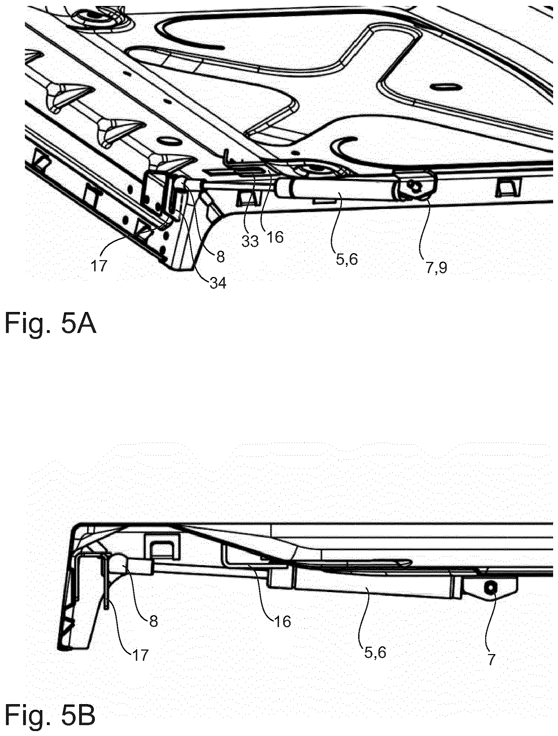

Das Rückstellelement 5 und die weitere Ausgestaltung gemäß einer bevorzugten Ausführungsform des Sitzteils 3 ist in den Figuren 5A und 5B näher dargestellt.

Wie dargestellt, weist das Rückstellelement 5 ein erstes Ende 7 und ein zweites Ende 8 auf. Bevorzugt ist das Rückstellelement 5 ein Gasdruckfederelement 6. Das erste Ende 7 ist mit dem Sitzteil 3 und das zweite Ende 8 ist mit dem Sitzteilrahmen 2 verbunden, wobei der Sitzteilrahmen 2 hier nicht gezeigt ist.

Bei einer Verlagerung des Sitzteils 3 gegenüber dem Sitzteilrahmen 2 werden durch die Anordnung der Enden 7, 8 die Enden 7, 8 zueinander bewegt, so dass das Gasdruckfederelement 6 betätigt wird. In der Grundstellung G ist das Gasdruckfederelement 6 in der Grundstellung G im Wesentlichen entspannt und in der verlagerten Stellung V komprimiert, so dass das Gasdruckfederelement 6 dazu tendiert, sich zu entspannen. Aufgrund der Gewichtskraft der Person P ist dies aber nicht möglich, da die Ausschubkraft des Gasdruckfederelements 6 zu gering ist.

Weiter ist der erste Endanschlag 16 dargestellt, welcher bevorzugt durch ein L-förmiges Element ausgebildet ist. Entlang der L-Form erstreckt sich ein Langloch 33, welches dazu ausgebildet und vorgesehen ist, mit dem Bolzenelement 18 wechselzuwirken. Das Bolzenelement 18 kann durch die L-förmige Ausgestaltung des Langlochs 33 bei einer Verlagerung nach vorne in das Langloch 33 einfädeln.

Darüber hinaus ist bevorzugt auch ein zweiter Endanschlag 17 dargestellt, welcher eine Doppelfunktion erfüllt. Die erste Funktion besteht darin, das zweite Ende 8 entlang der Höhenrichtung H zu führen. Dies ist besonders bei der Montage bzw. Demontage hilfreich. Die zweite Funktion ist der Endanschlag der Bewegung hinsichtlich der Rückstellung, das heißt bei einer Verlagerung nach hinten. Die Entspannung des Rückstellelements 5 kann hierdurch begrenzt werden.

Gemäß einer Ausführungsform kann der zweite Endanschlag 17 U-förmig ausgestaltet sein und ein L-förmiges Langloch 34 aufweisen, mittels welchem das zweite Ende 8 geführt werden kann. Eine derartige Führung ist insbesondere beim Zusammenbau hilfreich, da eine gute Vorab-Positionierung des Rückstellelements 5 bei der Montage, eine gute Lösbarkeit und Verhindern eines Herunterfallens des zweiten Endes 8 bei Montage und Demontage gewährleistet wird.

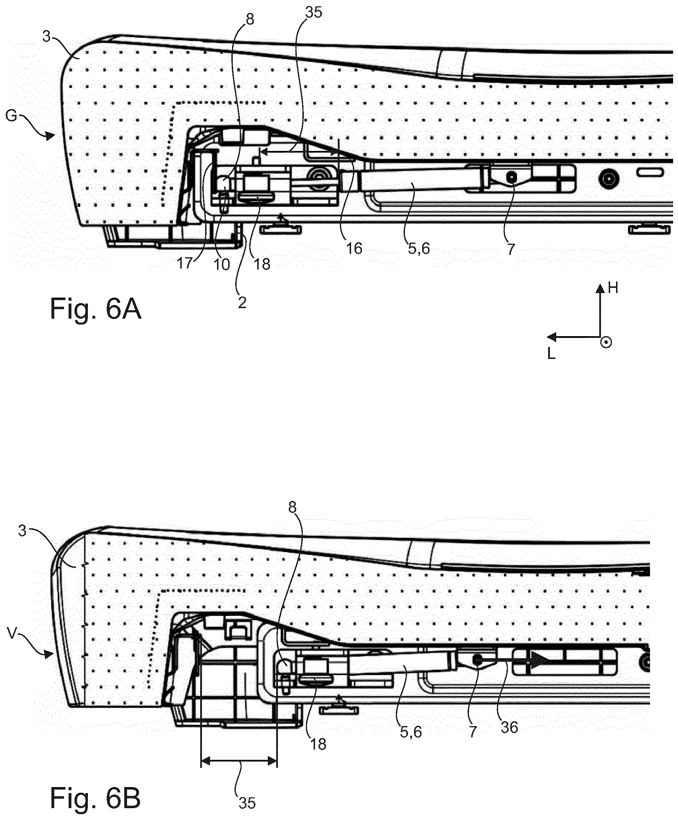

In den Figuren 6A und 6B ist das Funktionsprinzip der vorliegenden Erfindung nochmals genauer dargestellt. So zeigt die Figur 6A die Grundstellung G und die Figur 6B die verlagerte Stellung V.

Gemäß der Figur 6A, welche die Grundstellung G des Fahrzeugsitzes 1 bzw. des Sitzteils 3 zeigt, ist das zweite Ende 8 des Rückstellelements 5 kontaktierend mit dem zweiten Endanschlag 17. Weiter ist das Bolzenelement 18 in einem ersten Abstand 35 zu dem Ende des Langlochs 33 angeordnet, so dass der erste Abstand 35 dem maximalen Verlagerungsweg des Sitzteils 3 entspricht.

Das Rückstellelement 5, vorliegend das Gasdruckfederelement 6, ist im Wesentlichen entspannt. Eine geringe Spannung liegt dahingehend vor, dass das zweite Ende 8 den zweiten Endanschlag 17 kontaktiert und der Abstand zwischen dem ersten Ende 7 und dem zweiten Ende 8 nicht vollständig dem maximalen Abstand zwischen den Enden 7, 8 entspricht. Bevorzugt kann es vorgesehen sein, dass auch das erste Ende 7 mittels eines ersten Kugelkopfelements 9 mit dem Sitzteil 3 drehbar verbunden ist.

Wird nun das Sitzteil 3 nach vorne verlagert, beispielsweise in die maximal verlagerte Stellung V gemäß der Figur 6B, so kontaktiert nun das Bolzenelement 18 das Langloch 33 und wird von diesem in der Verlagerung begrenzt. Das zweite Ende 8 ist nun gelöst von dem zweiten Endanschlag 17. Das zweite Ende 8 verlagert sich in Richtung des ersten Endes 7 des Rückstellelements 5, so dass vorliegend das Rückstellelement 5 komprimiert wird und eine Gegenkraft erzeugt, die der Verlagerung in die entgegengesetzte Richtung wirkt; dies ist dargestellt durch den Pfeil 36, der die Gegenkraft 36 darstellt.

Dabei ist die Gegenkraft 36, insbesondere die maximale Gegenkraft 36, kleiner als die Gewichtskraft einer Person P, insbesondere auch, wenn die Person P ein Kind ist. Durch die Gewichtskraft wird daher das Sitzteil 3 in der jeweiligen verlagerten Stellung V gehalten.

Steht nun die Person P auf und verlässt das Sitzteil 3, so wirkt die Gewichtskraft der Person P nicht mehr auf das Sitzteil 3 und die Gegenkraft 36 verlagert das Sitzteil 3 aus der verlagerten Stellung V in die Grundstellung G.

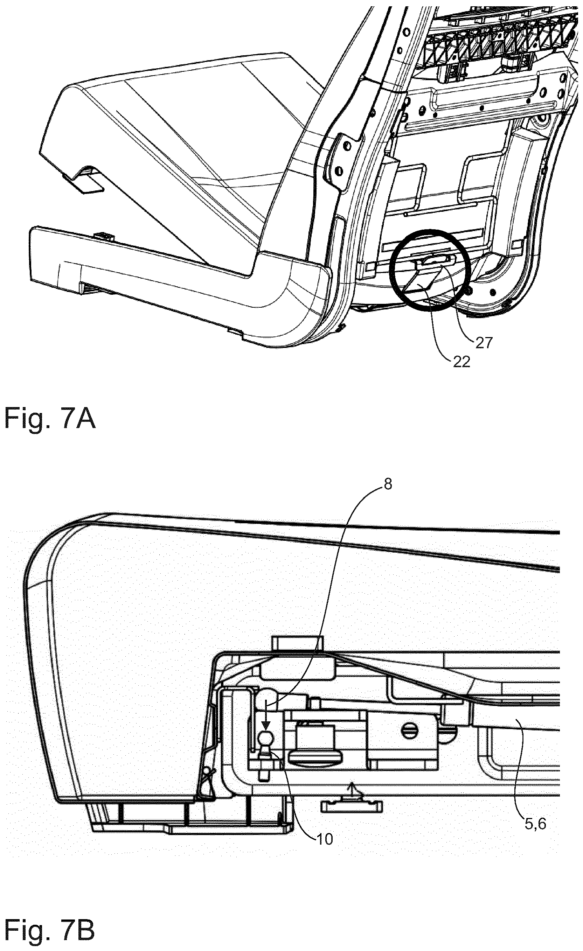

In den Figuren 7A bis 7C wird schematisch noch das Montageverfahren beschrieben.

Dabei liegen das Sitzteil 3 und der Sitzteilrahmen 2 zunächst als separate Teile vor, wie in den Figuren 2A und 2B dargestellt.

Das Sitzteil 3 und der Sitzteilrahmen 2 werden nun gemäß der vorliegenden Ausführungsform, wie folgt montiert.

Zunächst wird das Sitzteil 3 schräg angestellt und das Montierelement 22 des Sitzteils 3 in eine entsprechende Montieraufnahme 37 der Rückenlehne 19 eingeführt bzw. eingehängt. Weiter wird das Sitzteil 3 danach über die Montageabschnitte 28 der Nuten 12 mit den Nutensteinelementen 11 verbunden, indem das Sitzteil 3 in eine horizontale Stellung gebracht wird.

Der erste Endanschlag 16 ist hierbei in der Längsrichtung L gesehen vor dem Bolzenelement 18 wobei das Bolzenelement 18 nicht in den ersten Endanschlag 16 eingreifend angeordnet ist, so dass zum Einstellen der Grundstellung G das Bolzenelement 18 in einer Höhenrichtung H nach unten verlagert wird, anschließend wird das Sitzteil 3 in Längsrichtung L solange nach hinten verlagert, bis das Bolzenelement 18 in den ersten Endanschlag 16 einrasten kann und Verlagern des Bolzenelements 18 in Höhenrichtung H nach oben und Kontaktieren des ersten Endanschlags 16.

Das Sitzteil 3 befindet sich daher in der Grundstellung G. Als nächstes wird das zweite Ende 8 mit dem zweiten Kugelkopfelement 10 verbunden, indem das zweite Ende 8 entlang der Höhenrichtung H nach unten verlagert wird und mit dem zweiten Kugelkopfelement 10 verbunden wird. Dies ist in Figur 7B dargestellt.

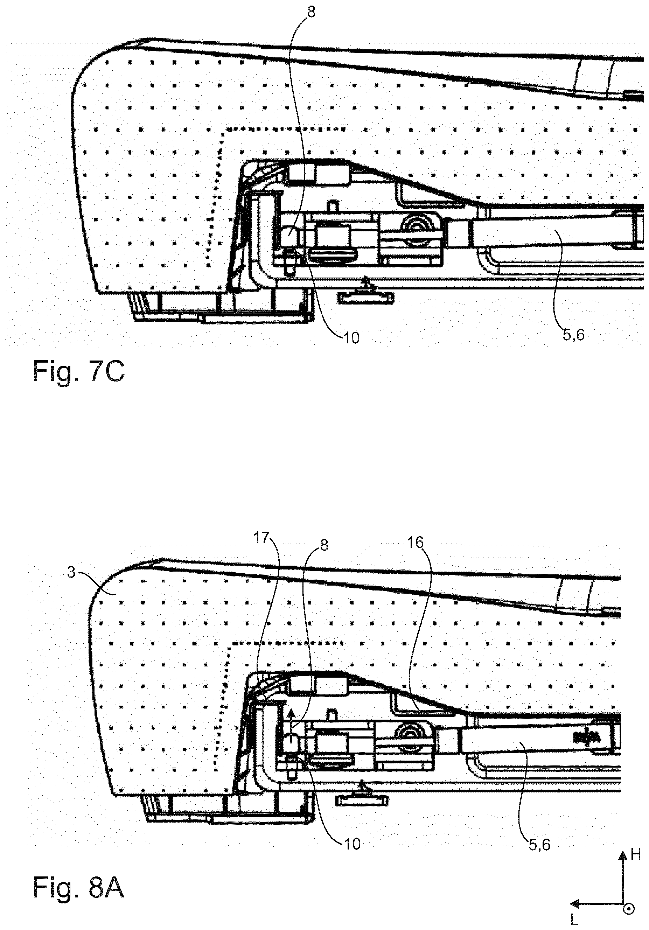

Der zusammengebaute Zustand des Fahrzeugsitzes 1 ist in der Figur 7C dargestellt.

Die weiteren zeigen Figuren 8A bis 8E die Demontage des Sitzteils 3 von dem Sitzteilrahmen 2.

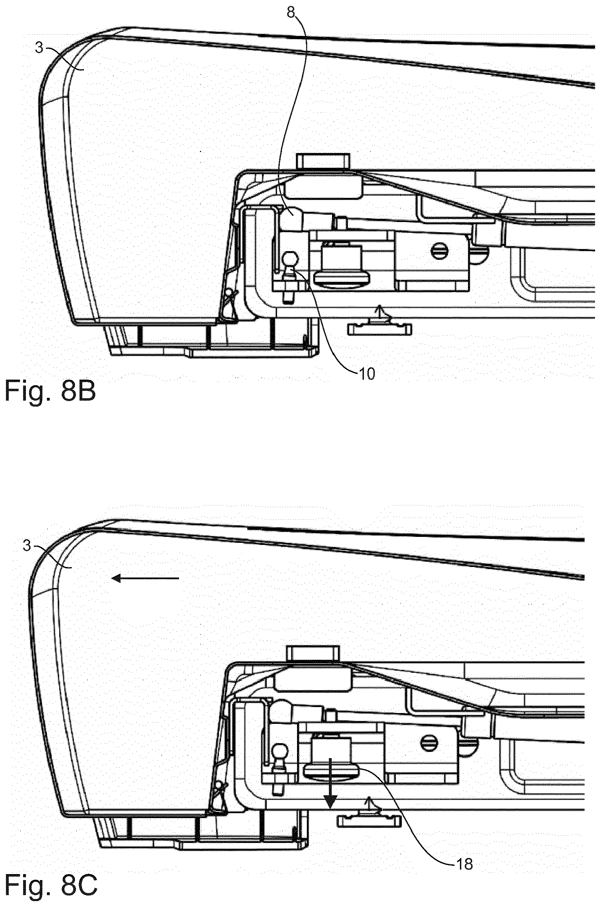

In einem ersten Schritt, dargestellt in der Figur 8A, wird das zweite Ende 8 von dem zweiten Kugelkopfelement 10 gelöst und nach oben verlagert, so dass das Sitzteil 3 und der Sitzteilrahmen 2 kraftmäßig entkoppelt sind, da das Rückstellelement 5 nun ausschließlich mit dem Sitzteil 3 verbunden ist. Dies ist in der Figur 8B dargestellt.

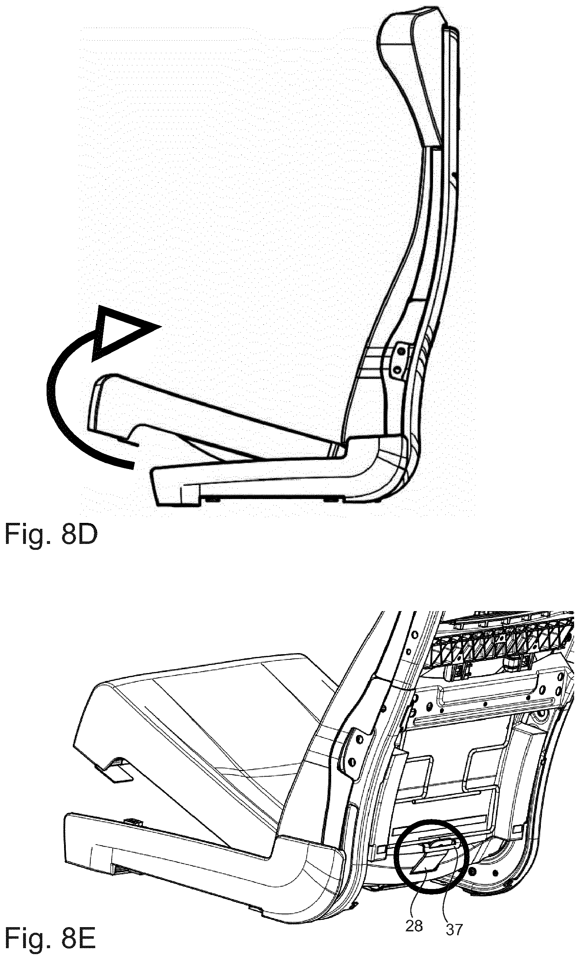

Um nun die weitere Verbindung zwischen Sitzteil 3 und Sitzteilrahmen 2 zu lösen, nämlich die Nutensteinführung, ist es vorgesehen, dass das Sitzteil 3 nach vorne verlagert wird und gleichzeitig das Bolzenelement 18 nach unten verlagert wird, so dass das Sitzteil 3 über den ersten Endanschlag 16 hinaus verlagert werden kann, um den jeweiligen Nutenstein 11 in den Montageabschnitt 28 der zugehörigen Nut 12 zu verlagern. Dies wird in der Figur 8C dargestellt. Ist dies der Fall, dann kann das Sitzteil 3, wie in der Figur 8D, schräg gestellt werden, wodurch sich die Nutensteinelemente 11 und die Nuten 12 voneinander trennen. Weiter ist es notwendig, das Sitzteil 3 solange zu drehen, bis auch das Montierelement 22 aus der Montieraufnahme 37 herausgeführt ist und keine Verbindung mehr zwischen Montierelement 22 und Montieraufnahme 37 möglich ist. Das Sitzteil 3 kann dann entfernt werden. Diese Schritte sind in den Figuren 8D und 8E dargestellt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Sitzteilrahmen
- 3: Sitzteil
- 4: Führungseinrichtung
- 5: Rückstellelement
- 6: Gasdruckfederelement
- 7: erstes Ende des Rückstellelements
- 8: zweites Ende des Rückstellelements
- 9: erstes Kugelkopfelement
- 10: zweites Kugelkopfelement
- 11: Nutensteinelement
- 12: Nut
- 13: erster Abschnitt
- 14: zweiter Abschnitt
- 15: dritter Abschnitt
- 16: erster Endanschlag
- 17: zweiter Endanschlag
- 18: Bolzenelement
- 19: Rückenlehne
- 20: Armlehne
- 21: Kopfstütze
- 22: Montierelement
- 23: erstes Abdeckelement
- 24: zweites Abdeckelement
- 25: erste Breite
- 26: zweite Breite
- 27: dritte Breite
- 28: Montageabschnitt
- 29: erstes Halteelement
- 30: erster Schenkel
- 31: zweiter Schenkel
- 32: Haltestück
- 33: Langloch
- 34: Langloch
- 35: erster Abstand
- 36: Gegenkraft/Pfeil
- 37: Montieraufnahme

- F: Kraft
- G: Grundstellung
- P: Person
- V: verlagerte Stellung
- B: Breitenrichtung
- L: Längsrichtung
- H: Höhenrichtung

## Patentansprüche

1. Fahrzeugsitz mit einem Sitzteilrahmen und einem zu dem Sitzteilrahmen verlagerbaren Sitzteil, wobei das Sitzteil an dem Sitzteilrahmen mittels einer Führungseinrichtung geführt ist,
**dadurch gekennzeichnet, dass**
das Sitzteil durch eine auf das Sitzteil einwirkende Kraft, welche durch eine auf dem Sitzteil sitzende Person auf das Sitzteil aufgebracht werden kann, gegenüber dem Sitzteilrahmen aus einer Grundstellung in eine verlagerte Stellung verlagerbar ist, wobei der Fahrzeugsitz dazu ausgebildet und vorgesehen ist, dass das Sitzteil in der verlagerten Stellung durch eine Gewichtskraft der auf dem Sitzteil sitzenden Person gehalten werden kann,
und wobei ein Rückstellelement vorgesehen und ausgebildet ist, das Sitzteil aus der verlagerten Stellung in die Grundstellung zu verlagern, wenn die Person das Sitzteil verlässt.

2. Fahrzeugsitz nach Anspruch 1,
**dadurch gekennzeichnet, dass**
das Rückstellelement ein erstes Ende und ein zweites Ende aufweist, wobei das erste Ende mit dem Sitzteil und das zweite Ende mit dem Sitzteilrahmen verbunden sind, insbesondere drehbar verbunden sind.

3. Fahrzeugsitz nach Anspruch 2,
**dadurch gekennzeichnet, dass**
das erste Ende mittels eines ersten Kugelkopfelements mit dem Sitzteil und/oder das zweite Ende mittels eines zweiten Kugelkopfelements mit dem Sitzteilrahmen verbunden sind.

4. Fahrzeugsitz nach einem der Ansprüche 1 bis 3,
**dadurch gekennzeichnet, dass**
das Rückstellelement durch ein Gasdruckfederelement ausgebildet ist, wobei das Gasdruckfederelement in der Grundstellung im Wesentlichen entspannt und in der verlagerten Stellung komprimiert ist.

5. Fahrzeugsitz nach einem der Ansprüche 1 bis 4,
**dadurch gekennzeichnet, dass**
die Führungseinrichtung Nutensteinelemente und Nuten umfasst, wobei die Nutensteine zumindest teilweise komplementär zu den Nuten ausgebildet sind, so dass die Nutensteine in den Nuten führbar sind.

6. Fahrzeugsitz nach Anspruch 5,
**dadurch gekennzeichnet, dass**
ein Nutensteinelement einen ersten Abschnitt, einen zweiten Abschnitt und einen dritten Abschnitt umfassen, wobei der erste Abschnitt oberhalb der Nute angeordnet ist und breiter als die Nute ausgebildet ist, und wobei der zweite Abschnitt sich an den ersten Abschnitt anschließt und sich durch die entsprechende Nut hindurch erstreckt und ein dritter Abschnitt unterhalb der Nut angeordnet ist und sich an den zweiten Abschnitt anschließt, wobei der dritte Abschnitt ebenso breiter als die Nut ausgebildet ist.

7. Fahrzeugsitz nach einem der Ansprüche 1 bis 5,
**dadurch gekennzeichnet, dass**
an dem Sitzteil ein erster Endanschlag und an dem Sitzteilrahmen ein Bolzenelement angeordnet sind, welche dazu vorgesehen und ausgebildet sind, bei einer Bewegung des Sitzteils aus der verlagerten Stellung in die Grundstellung miteinander wechselzuwirken, wobei ein Kontaktieren des Bolzenelements mit dem Endanschlag die Grundstellung definiert.

8. Fahrzeugsitz nach Anspruch 2 oder 3,
**dadurch gekennzeichnet, dass**
ein zweiter Endanschlag an dem Sitzteil angeordnet ist, wobei in der Grundstellung das zweite Ende mit dem zweiten Endanschlag in Kontakt steht und in der verlagerten Stellung das zweite Ende von dem zweiten Endanschlag gelöst ist.

9. Verfahren zur werkzeuglosen Montage eines Fahrzeugsitzes nach einem der Ansprüche 1 bis 8, umfassend die Verfahrensschritte:
a) Bereitstellen eines Sitzteilrahmens und eines Sitzteils, wobei mit dem Sitzteil ein Rückstellelement verbunden ist,
b) Verbinden des Sitzteilrahmens und des Sitzteils mittels der Führungseinrichtung;
c) Verbinden des ersten Endes des Rückstellelements mit dem Sitzteilrahmen.

10. Verfahren nach Anspruch 9,
**dadurch gekennzeichnet, dass**
im Verfahrensschritt c) das erste Ende mittels des zweiten Endanschlags umfassend eine Führungskulisse in der Höhenrichtung verlagert wird, so dass das erste Ende mit dem Sitzteilrahmen verbunden werden kann.

11. Verfahren nach Anspruch 9 oder 10,
**dadurch gekennzeichnet, dass**
der erste Endanschlag nach dem Verfahrensschritt b) in einer Längsrichtung gesehen vor dem Bolzenelement und das Bolzenelement nicht in den Endanschlag eingreifend angeordnet ist, so dass zum Einstellen der Grundstellung das Bolzenelement in einer Höhenrichtung nach unten verlagert wird, anschließend wird das Sitzteil in Längsrichtung solange verlagert, bis das Bolzenelement in den Endanschlag einrasten kann und Verlagern des Bolzenelements in Höhenrichtung nach oben und Kontaktieren des ersten Endanschlags.

## Geänderte Patentansprüche

### Geänderte Patentansprüche gemäss Regel 137(2) EPÜ.

1. Fahrzeugsitz (1) mit einem Sitzteilrahmen (2) und einem zu dem Sitzteilrahmen (2) verlagerbaren Sitzteil (3), wobei das Sitzteil (3) an dem Sitzteilrahmen (2) mittels einer Führungseinrichtung (4) geführt ist,
wobei das Sitzteil (3) durch eine auf das Sitzteil (3) einwirkende Kraft (F), welche durch eine auf dem Sitzteil (3) sitzende Person (P) auf das Sitzteil (3) aufgebracht werden kann, gegenüber dem Sitzteilrahmen (2) aus einer Grundstellung (G) in eine verlagerte Stellung (V) verlagerbar ist, wobei der Fahrzeugsitz (1) dazu ausgebildet und vorgesehen ist, dass das Sitzteil (3) in der verlagerten Stellung (V) durch eine Gewichtskraft der auf dem Sitzteil (3) sitzenden Person (P) gehalten werden kann,
und wobei ein Rückstellelement (5) vorgesehen und ausgebildet ist, das Sitzteil (3) aus der verlagerten Stellung (V) in die Grundstellung (G) zu verlagern, wenn die Person (P) das Sitzteil (3) verlässt,
**dadurch gekennzeichnet, dass**
an dem Sitzteil (3) ein erster Endanschlag (16) und an dem Sitzteilrahmen (2) ein Bolzenelement (18) angeordnet sind, welche dazu vorgesehen und ausgebildet sind, bei einer Bewegung des Sitzteils (3) aus der verlagerten Stellung (V) in die Grundstellung (G) miteinander wechselzuwirken, wobei ein Kontaktieren des Bolzenelements (18) mit dem Endanschlag die Grundstellung (G) definiert.

2. Fahrzeugsitz (1) nach Anspruch 1,
**dadurch gekennzeichnet, dass**
das Rückstellelement (5) ein erstes Ende und ein zweites Ende aufweist, wobei das erste Ende mit dem Sitzteil (3) und das zweite Ende mit dem Sitzteilrahmen (2) verbunden sind, insbesondere drehbar verbunden sind.

3. Fahrzeugsitz (1) nach Anspruch 2,
**dadurch gekennzeichnet, dass**
das erste Ende mittels eines ersten Kugelkopfelements (9) mit dem Sitzteil (3) und/oder das zweite Ende mittels eines zweiten Kugelkopfelements (10) mit dem Sitzteilrahmen (2) verbunden sind.

4. Fahrzeugsitz (1) nach einem der Ansprüche 1 bis 3,
**dadurch gekennzeichnet, dass**
das Rückstellelement (5) durch ein Gasdruckfederelement (6) ausgebildet ist, wobei das Gasdruckfederelement (6) in der Grundstellung (G) im Wesentlichen entspannt und in der verlagerten Stellung (V) komprimiert ist.

5. Fahrzeugsitz (1) nach einem der Ansprüche 1 bis 4,
**dadurch gekennzeichnet, dass**
die Führungseinrichtung (4) Nutensteinelemente (11) und Nuten (12) umfasst, wobei die Nutensteine zumindest teilweise komplementär zu den Nuten (12) ausgebildet sind, so dass die Nutensteine in den Nuten (12) führbar sind.

6. Fahrzeugsitz (1) nach Anspruch 5,
**dadurch gekennzeichnet, dass**
ein Nutensteinelement (11) einen ersten Abschnitt (13), einen zweiten Abschnitt (14) und einen dritten Abschnitt (15) umfassen, wobei der erste Abschnitt (13) oberhalb der Nute (12) angeordnet ist und breiter als die Nute (12) ausgebildet ist, und wobei der zweite Abschnitt (14) sich an den ersten Abschnitt (13) anschließt und sich durch die entsprechende Nut (12) hindurch erstreckt und ein dritter Abschnitt (15) unterhalb der Nut (12) angeordnet ist und sich an den zweiten Abschnitt (14) anschließt, wobei der dritte Abschnitt (15) ebenso breiter als die Nut ausgebildet ist.

7. Fahrzeugsitz (1) nach Anspruch 2 oder 3,
**dadurch gekennzeichnet, dass**
ein zweiter Endanschlag (17) an dem Sitzteil (3) angeordnet ist, wobei in der Grundstellung (G) das zweite Ende mit dem zweiten Endanschlag (17) in Kontakt steht und in der verlagerten Stellung (V) das zweite Ende von dem zweiten Endanschlag (17) gelöst ist.

8. Verfahren zur werkzeuglosen Montage eines Fahrzeugsitzes (1) nach einem der Ansprüche 1 bis 8, umfassend die Verfahrensschritte:
a) Bereitstellen eines Sitzteilrahmens (2) und eines Sitzteils (3), wobei mit dem Sitzteil (3) ein Rückstellelement (5) verbunden ist,
b) Verbinden des Sitzteilrahmens (2) und des Sitzteils (3) mittels der Führungseinrichtung (4);
c) Verbinden des ersten Endes des Rückstellelements (5) mit dem Sitzteilrahmen (2),
**dadurch gekennzeichnet, dass**
an dem Sitzteil (3) ein erster Endanschlag (16) und an dem Sitzteilrahmen (2) ein Bolzenelement (18) angeordnet sind, welche dazu vorgesehen und ausgebildet sind, bei einer Bewegung des Sitzteils (3) aus der verlagerten Stellung (V) in die Grundstellung (G) miteinander wechselzuwirken, wobei ein Kontaktieren des Bolzenelements (18) mit dem Endanschlag die Grundstellung (G) definiert.

9. Verfahren nach Anspruch 8,
**dadurch gekennzeichnet, dass**
im Verfahrensschritt c) das erste Ende mittels des zweiten Endanschlags (17) umfassend eine Führungskulisse in der Höhenrichtung (H) verlagert wird, so dass das erste Ende mit dem Sitzteilrahmen (2) verbunden werden kann.

10. Verfahren nach Anspruch 8 oder 9,
**dadurch gekennzeichnet, dass**
der erste Endanschlag (16) nach dem Verfahrensschritt b) in einer Längsrichtung (L) gesehen vor dem Bolzenelement (18) und das Bolzenelement (18) nicht in den Endanschlag eingreifend angeordnet ist, so dass zum Einstellen der Grundstellung (G) das Bolzenelement (18) in einer Höhenrichtung (H) nach unten verlagert wird, anschließend wird das Sitzteil (3) in Längsrichtung (L) solange verlagert, bis das Bolzenelement (18) in den Endanschlag einrasten kann und Verlagern des Bolzenelements (18) in Höhenrichtung (H) nach oben und Kontaktieren des ersten Endanschlags.
